# EUROPÄISCHE PATENTSCHRIFT

(11) **EP 2 008 864 B1**
(45) Veröffentlichungstag und Bekanntmachung des Hinweises auf die Patenterteilung: **11.08.2010**
(21) Anmeldenummer: 08158528.3
(22) Anmeldetag: 19.06.2008
(51) Int. Cl.: B60N 2/16

(54) **Fahrzeugsitz mit Schieberventil**
Vehicle seat with slide valve
Siège de véhicule doté d'une soupape à coulisse

(30) Priorität: 29.06.2007 DE 102007030467
(43) Veröffentlichungstag der Anmeldung: 31.12.2008
(73) Patentinhaber: GRAMMER AG, 92224 Amberg (DE)
(72) Erfinder: Lorey, Konstantin, 92546, Schmidgaden (DE); Haller, Erwin, 92262, Birgland (DE); Burger, Thomas, 92507, Nabburg (DE)
(74) Vertreter: Hannke, Christian

(56) Entgegenhaltungen:
- EP-A- 1 844 979
- DE-U1-202007 002 243

## Beschreibung

Die Erfindung betrifft einen Fahrzeugsitz mit einem höhenverstellbaren Sitzgestell, das zumindest zwei relativ zueinander bewegliche Sitzgestellteile und zumindest eine zwischen dem Sitzgestellteilen zur Höhenverstellung angeordnete Fluidfeder, insbesondere Luftfeder aufweist, mit zumindest einer zur Beeinflussung der Fluidfeder vorgesehenen Steuereinrichtung, die zumindest eine an einem ersten Sitzgestellteil angebrachte Ventileinrichtung mit Steuerventilen zur Ansteuerung von Fluidströmen für die Fluidfeder sowie ein an einem zweiten Sitzgestellteil vorgesehenes Steuerelement zur Ansteuerung der Steuerventile aufweist, gemäß dem Oberbegriff des Patentanspruches 1. Ein derartiger Fahrzeugsitz ist aus der DE 20 2007 002243 U1 bekannt.

Aus EP 0 710 606 2 ist ein Fahrzeugsitz mit einem höhenverstellbaren Sitzgestell bekannt, das sich aus zwei scherenartig zueinander bewegenden Sitzgestellteilen und einer darauf angeordneten Sitzfläche zusammensetzt und eine Steuerkulisse aufweist, die an dem einen Sitzgestellteil befestigt ist sowie eine Ventileinrichtung mit Steuerventilen zur Ansteuerung von Gasströmen für eine Fluidfeder umfasst, die mit dem weiteren Sitzgestellteil verbunden ist. Eine aus dieser Ventileinrichtung mit den Steuerventilen und der Steuerkulisse zusammengesetzte Steuereinrichtung dient zum Höhenverstellen der scherenartigen Sitzgestellteile mittels der Fluidfeder, indem diese mit Luft belüftet oder entlüftet wird. Die Steuerkulisse wird mittels einer Einstelleinrichtung unabhängig von einer relativen Stellung des Sitzgestellteiles derart relativ beweglich zum zweiten Sitzgestellteil eingestellt, dass eine von der Einstelleinrichtung bewirkte Bewegung der Steuerkulisse relativ zum zweiten Sitzgestellteil eine Höhenverstellung des Fahrzeugsitzes bewirkt. Hierbei ist die Steuerkulisse plattenförmig ausgebildet und kann Betätigungshebel durch deren Drehbewegung betätigen, um die Steuerventile anzusteuern. Die Drehbewegung der Steuerkulisse ist mittels einer Rastmechanik durchführbar. Derartige Rastmechaniken erfordern nachteilhaft eine Abstimmung mit den Umschaltwegen der Steuerventile, um eine Funktionssicherheit der Höheneinstellung zu gewährleisten. Die sich hieraus ergebenden zu berücksichtigenden Toleranzen aufgrund der erforderlichen Abstimmung könnten zu einem ungewollten frühzeitigen oder zu späten Umschalten der Steuerventile führen.

Zudem wird für das Durchführen der normalen Schwingungsfederungsbewegung ohne gewollte Höhenverstellung vorrangig ein kleiner Drosselquerschnitt bei den Steuerungsventilen angestrebt, um eine optimierte Schwingungsbewegung des Fahrzeugsitzes in Höhenrichtung zu erhalten. Dies führt allerdings bei gleichzeitiger Verwendung der Steuerungseinrichtung für gewollte Höhenverstellungen zu langen Anhebezeiten des Fahrzeugsitzes, da eine nur geringe Luftzufuhr über den Eingangsdrosselweg bei einer derartig gewollten Höhenverstellung möglich ist. Somit ist eine nur langsame Höhenverstellung möglich.

Demzufolge liegt der vorliegenden Erfindung die Aufgabe zugrunde, einen Fahrzeugsitz mit einem höhenverstellbaren Sitzgestell, das mittels einer Fluidfeder, insbesondere Luftfeder und einer Steuereinrichtung Höhenverstellungen und Schwingungsbewegungen durchführen kann, zur Verfügung zu stellen, der eine Höhenverstellung mit auswählbarer Geschwindigkeit und eine in Abhängigkeit von dem Federweg der Luftfeder optimierte Luftzu- und -abfuhr zu und von der Luftfeder ermöglicht.

Diese Aufgabe wird gemäß den Merkmalen des Patentanspruches 1 gelöst.

Kerngedanke der Erfindung ist es, dass bei einem Fahrzeugsitz mit einem höhenverstellbaren Sitzgestell, das zumindest zwei relativ zueinander bewegliche Sitzgestellteile und zumindest eine zwischen den Sitzgestellteilen und einer Basis zur Höhenverstellung angeordnete Fluidfeder aufweist, mit zumindest einer zur Beeinflussung der Fluidfeder vorgesehenen Steuereinrichtung, die zumindest eine an einem ersten Sitzgestellteil angebrachte Ventileinrichtung mit Steuerventilen zu Ansteuerung von Fluidströmen für die Fluidfeder sowie ein an einem zweiten Sitzgestellteil vorgesehene Steuerelement zur Ansteuerung der Steuerventile aufweist, sodass eine Höheneinstellung und/oder dämpfende Schwingungsbewegung des Fahrzeugsitzes gewährleistet ist, und die Ventileinrichtung ein innenseitig zylinderförmiges Bauteil mit mindestens einem darin verschiebbaren angeordneten Stangenelement als Steuerelement aufweist. Das Stangenelement ist mit mindestens einer Fluidzu- und - abführöffnung ausgestattet, welche wahlweise einem der Steuerventile durch eine Relativverschiebung von dem zylinderförmigen Bauteil und dem Stangenelement zueinander zuordbar ist. Ein derartiges Schieberventil, welches vorzugsweise neben einem Dämpfungselement angeordnet ist, ermöglicht nicht nur vorteilhaft eine genaue Abstimmung der Menge an Luftzufuhr und Luftabfuhr zur Belüftung und Entlüftung der Luftfeder für den momentan vorhandenen Federweg der Luftfeder, sondern auch einen vereinfachten Aufbau einer derartigen Höhenverstellungseinrichtung, da nun nicht mehr konstruktionsaufwändige Steuerkulissen mit Rasteinrichtungen und dergleichen verwendet werden müssen. Dies hat auch geringe Herstellungskosten zur Folge.

Als Fluidfeder ist sowohl eine Gasfeder als auch eine Feder, deren Funktion auf zu- und abgeführte Flüssigkeiten beruht, zu verstehen. Eine derartige Gasfeder kann insbesondere als Luftfeder ausgebildet sein. Demzufolge kann es sich bei den Fluidströmen um Gasströme, insbesondere Luftströme, oder Flüssigkeitsströme handeln. Die Fluidzu- und -abführöffnung ist ebenso als eine Zu- und Abführöffnung für Gase, insbesondere Luft, oder Flüssigkeiten gestaltbar.

Die Luftfeder kann zwischen einem der Sitzgestellteile und auf einer Basis des Fahrzeugsitzes vorzugsweise in vertikaler Richtung angeordnet sein, um eine Kraftauswirkung auf den Fahrzeugsitz in vorzugsweise vertikaler Richtung zu erhalten. Selbstverständlich kann eine derartige Luftfeder auch in anderer Form angeordnet sein, wie beispielsweise zwischen den beiden sich zueinander bewegenden Scherengestellen.

Bei einer normalen Schwingungsbewegung des Fahrzeugsitzes wird durch die proportionale Auslenkung des Stangenelementes gegenüber dem innenseitigen zylinderförmigen Bauteil zu der Auslenkung der Gasfeder eine jeweils angepasste Menge zum gezielten Belüften oder Entlüften der Gasfeder für die Verbesserung von deren Dämpfungseigenschaften erreicht. Dies hat eine sehr gute Schwingungseigenschaft des Fahrzeugsitzes in Höhenrichtung zur Folge.

Bevorzugt ist die Gaszu- und -abführöffnung an der Oberfläche des Stangenelementes mit mindestens einer sich in Längsrichtung des Stangenelementes erstreckenden Kerbe mit einem tiefsten Punkt in dem bezogen auf die Längsrichtung vorhandenen Mittelpunkt, ausgestattet, wobei die Kerbe sich gemäß einer bevorzugten Ausführungsform in einen Winkel zur Längsrichtung des Stangenelementes erstrecken kann oder in Längsrichtung des Stangenelementes ausgebildet ist. Eine derartige Kerbe ermöglicht durch die unterschiedliche Tiefenausbildung ein gezieltes Zu- und Abführen von Luft in einer gewünschten Menge, sodass bei einer gewollten beispielsweise handbetätigten Höhenverstellung des Fahrzeugsitzes ein geringer Luftdurchsatz bei kleiner Anregung eines Betätigungselementes bzw. bei einer einmaligen Betätigung des Höhenverstellungs-Betätigungselementes erhalten wird. Dies hat ein sanftes, zielgenaues Anfahren des sich höhenverstellenden Fahrzeugsitzes an den gewünschten Punkt zur Folge.

Ebenso kann bei einer zweimal durchgeführten Betätigung des Höhenverstellungs-Betätigungselementes ein mittlerer Luftdurchsatz oder bei einer dreimaligen Betätigung bzw. einer SAS-Betätigung ein hoher Luftdurchsatz erhalten werden, woraus sich ein schnelleres Anfahren des sich höhenverstellbaren Fahrzeugsitzes ergibt, welches bei Erreichen der gewünschten Zielposition verzögert wird.

Die Gaszu- und -abführöffnung kann an der Oberfläche des Stangenelementes mindestens eine Mehrzahl in Längsrichtung des Stangenelementes hintereinander oder in einem Winkel zur Längsrichtung des Stangenelementes hintereinander angeordnete Bohrung mit von der Bohrung zu Bohrung zunehmenden Durchmessern aufweisen. Dies ermöglicht ebenso ein mehr oder weniger starkes Zu- und Abführen von Luft und von der Gasfeder in Abhängigkeit davon, durch welche Bohrung die Luft hindurchströmt. Idealerweise sind die Bohrungen derart angeordnet, dass diejenige Bohrung mit dem größten Durchmesser in Verlaufsrichtung der Bohrungen mittig angeordnet ist und zu den Enden hin Bohrungen mit zunehmenden kleinerwerdenden Durchmessern angeordnet sind.

Das innenseitig zylinderförmige Bauteil weist mindestens zwei das Stangenelement ringförmige umschließende Dichtelement zur Bildung von mindestens zwei voneinander getrennte hintereinander angeordnete Gaskammern innerhalb eines Zylindermantels des zylinderförmigen Bauteiles auf, sodass hierdurch die Gaszu- und -abführöffnung bei Überschreiten des Dichtelementes mit einer wählbaren Wegstrecke bei einer gewünschten Höhenverstellung eine mehr oder weniger starke Luftzu- und -abfuhr zu oder von den Gaskammern ermöglicht. Idealerweise ist hierbei eine erste Gaskammer mit dem ersten Steuerventil verbunden und steht unter einem Überdruck, der mittels einer externen Luftquelle pneumatisch aufgebaut wird. Eine zweite Kammer ist mit dem zweiten Steuerventil verbunden und weist normale atmosphärischen Druck auf, um hierdurch zu Entlüftungszwecken über das daran angeordnete zweite Steuerventil zu dienen, wenn über die Luftzu- und -abführöffnung Luft in diese Kammer zugeführt wird. Demgegenüber ist die erste Gaskammer dafür vorgesehen, dass sie Luft über die Luftzu- und -abführöffnung der Gasfeder zuleitet, wobei hierbei vorteilhaft das Stangenelement entlang seiner Längsrichtung zumindest teilweise einen Hohlraum mit einer Gasfederanschlussöffnung an seinem ersten Ende und der Gaszu- und -abführöffnung an seinem zweiten Ende aufweist.

Eine am Stangenelement endseitig angeordnete Einstelleinrichtung dient zum Einstellen des verschiebbaren Stangenelementes derart relativbeweglich zum innenseitig zylinderförmigen Bauteil, dass eine von der Einstelleinrichtung bewirkte Bewegung des Stangenelementes relativ zum zylinderförmigen Bauteil ein Höhenverstellung des Fahrzeugsitzes mit vorbestimmbarer Geschwindigkeit durch Verschieben der Gaszu- und -Abführöffnung in die erste oder zweite Gaskammer bewirkt wird.

Mindestens ein Federelement dient zum Federkraftbeaufschlagen der Einstellbewegung des Stangenelementes.

Das Stangenelement ist am zweiten Sitzgestellteil gelenkig aufgehängt, wohingegen das zylinderförmige Bauteil am ersten Sitzgestellteil gelenkig aufgehängt ist.

Weitere vorteilhafte Ausführungsformen ergeben sich aus den Unteransprüchen.

Vorteile und Zweckmäßigkeiten sind der nachfolgenden Beschreibung in Verbindung mit der Zeichnung zu entnehmen. Hierbei zeigen:
- Fig. 1a - c: ein Fahrzeugsitz in verschiedenen Höhenstellungen;
- Fig. 2: eine Ausschnittsdarstellung das Fahrzeugsitzgestell mit einer darin angeordneten Höhenverstelleinrichtung und einer Luftfeder in perspektivischer Darstellung;
- Fig. 3: in einer Ausschnittsdarstellung ein Fahrzeugsitzgestell mit der Luftfeder und der Höhenverstelleinrichtung im teilweisen Querschnitt;
- Fig. 4: in einer seitlichen Darstellung ein Ausschnitt des Fahrzeugsitzes mit der Höhenverstelleinrichtung im Querschnitt in einer ersten Arbeitsposition;
- Fig. 5: in einer Ausschnittsdarstellung den Fahrzeugsitz mit einer Höhenversteleinrichtung im Querschnitt in einer zweiten Arbeitsposition;
- Fig. 6a: das Fahrzeugsitzgestell mit der erfindungsgemäßen Höhenverstelleinrichtung in einer ersten Position;
- Fig. 6b: in einer Querschnittsdarstellung entlang des Schnittes A//A gemäß Fig. 6a die Höhenverstelleinrichtung in der ersten Position;
- Fig. 7a: das Fahrzeugsitzgestell mit der erfindungsgemäßen Höhenverstelleinrichtung in einer zweiten Position;
- Fig. 7b: in einer Querschnittsdarstellung entlang des Schnittes A//A gemäß Fig. 7a die Höhenverstelleinrichtung in einer zweiten Position;
- Fig. 8a: das Fahrzeugsitzgestell mit der erfindungsgemäßen Höhenverstelleinrichtung in einer dritten Position;
- Fig. 8b: in einer Querschnittsdarstellung entlang des Schnittes A//A die Höhenverstelleinrichtung in einer dritten Position;
- Fig. 9a: das Fahrzeugsitzgestell mit der erfindungsgemäßen Höhenverstelleinrichtung in einer vierten Position;
- Fig. 9b: ein Ausschnitt A, wie er in Fig. 9a angedeutet ist;
- Fig. 10a: ein Stangenelement für die Höhenverstelleinrichtung im Querschnitt gemäß einer ersten Variante;
- Fig. 10b: das in Fig. 10a gezeigte Stangenelement um 90° gedreht;
- Fig. 11 a: ein Stangenelement im Querschnitt gemäß einer zweiten Variante;

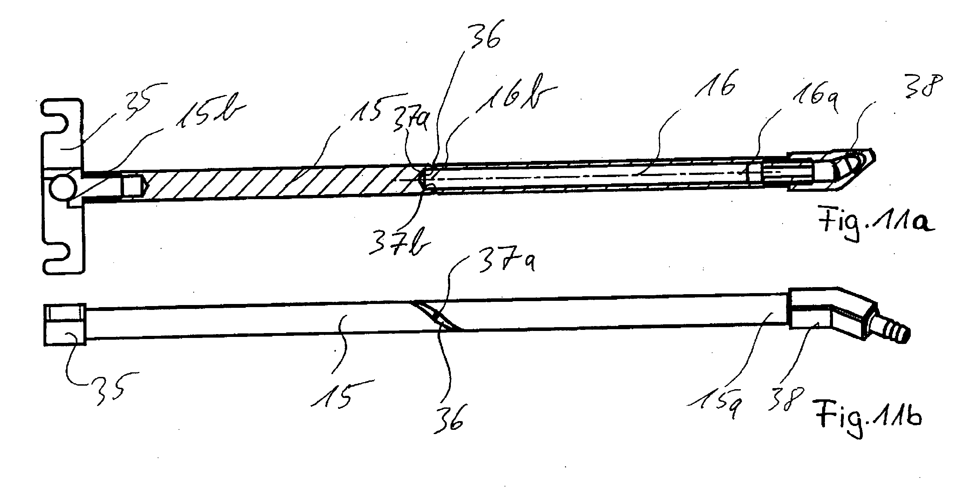

- Fig. 11 b: das Stangenelement gemäß der zweiten Variante um 90° gedreht;

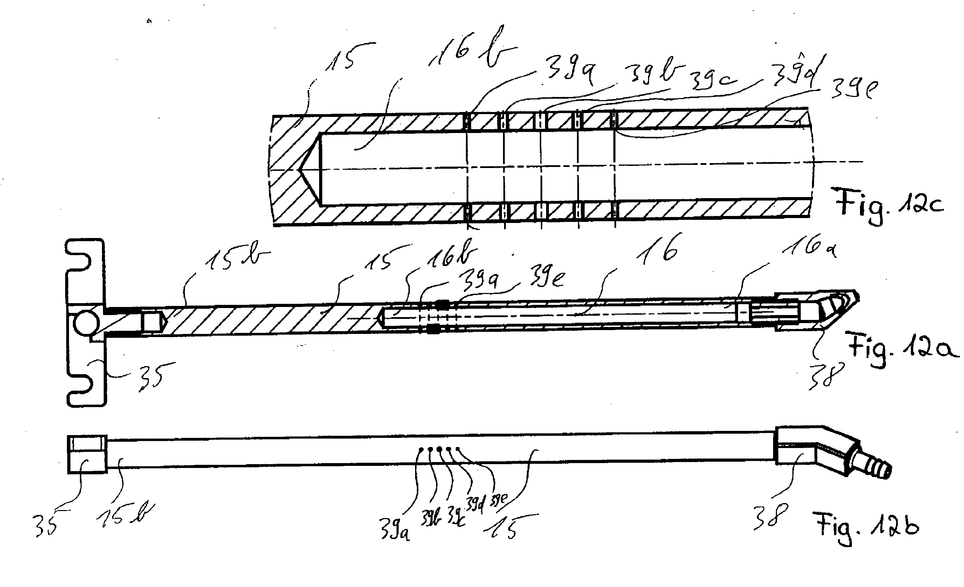

- Fig. 12a: das Stangenelement im Querschnitt gemäß einer dritten Variante;
- Fig. 12b: das Stangenelement gemäß Fig. 12a um 90° gedreht;
- Fig. 12c: ein Ausschnitt des Stangenelements gemäß der dritten Variante, und

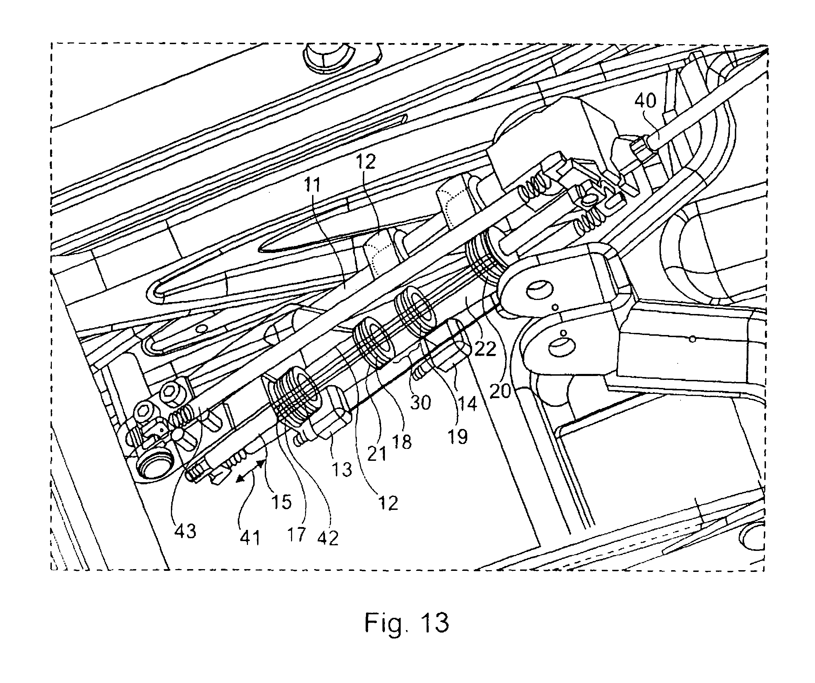

- Fig. 13: in einer perspektivischen Darstellung die Höhenverstelleinrichtung mit einer Einstelleinrichtung in erfindungsgemäßer Form.

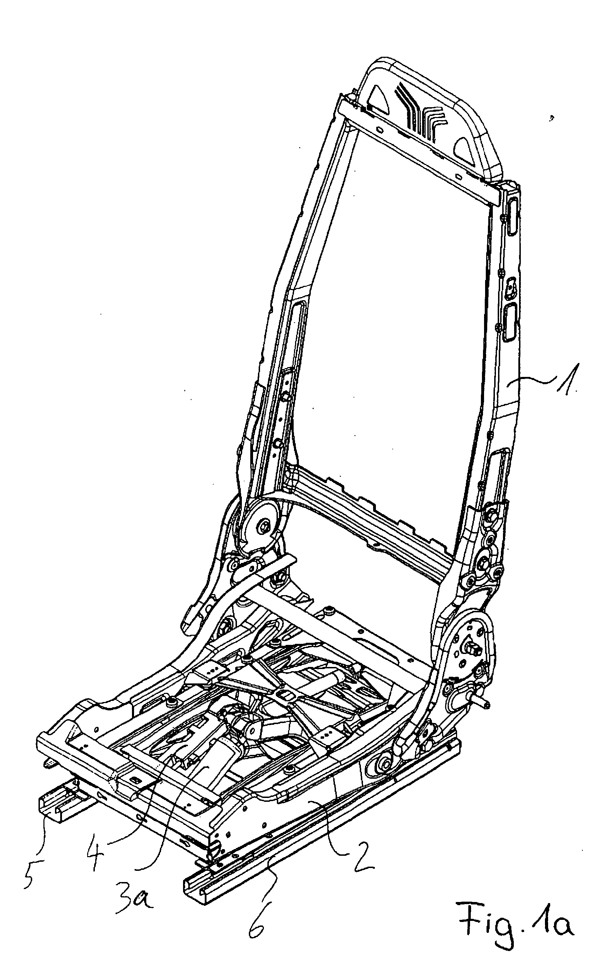

In Fig. 1a - c ist ein Fahrzeugsitz mit einer Rückenlehne 1 und einem Sitzteil 2 dargestellt, der in verschiedenen Höhenpositionen wiedergegeben ist. Die in Fig. 1a niedrigste Sitzposition des Fahrzeugsitzes zeigt ein zusammengeklapptes scherenartiges Sitzgestell mit einer als Gasfeder ausgestattete Luftfeder 3 und Steuereinrichtung 4 bzw. einer Höhenverstelleinrichtung.

Die Luftfeder 3 ist mit einem unteren Ende gegenüber einer Basis des Fahrzeugsitzes oder eines Karosserieteiles oder eines derartigen fest mit der Karosserie verbundenen weiteren nicht gezeigten Elementes und mit einem oberen Ende gegenüber zumindest einem Teil des scherenartigen Sitzgestelles verbunden.

Der Sitz ist auf Schienen 5, 6 in Vorwärts- und Rückwärtsrichtung verschiebbar angeordnet.

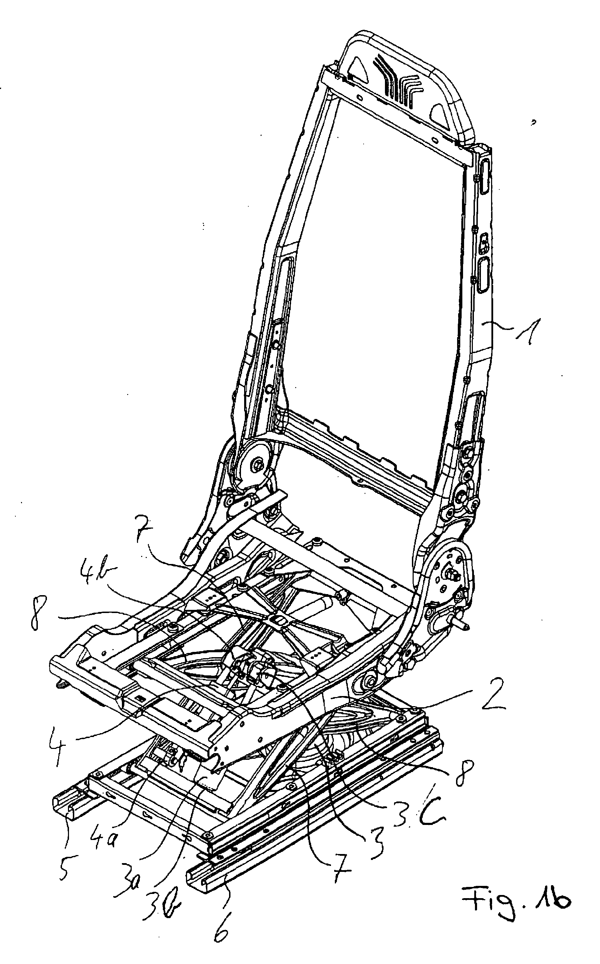

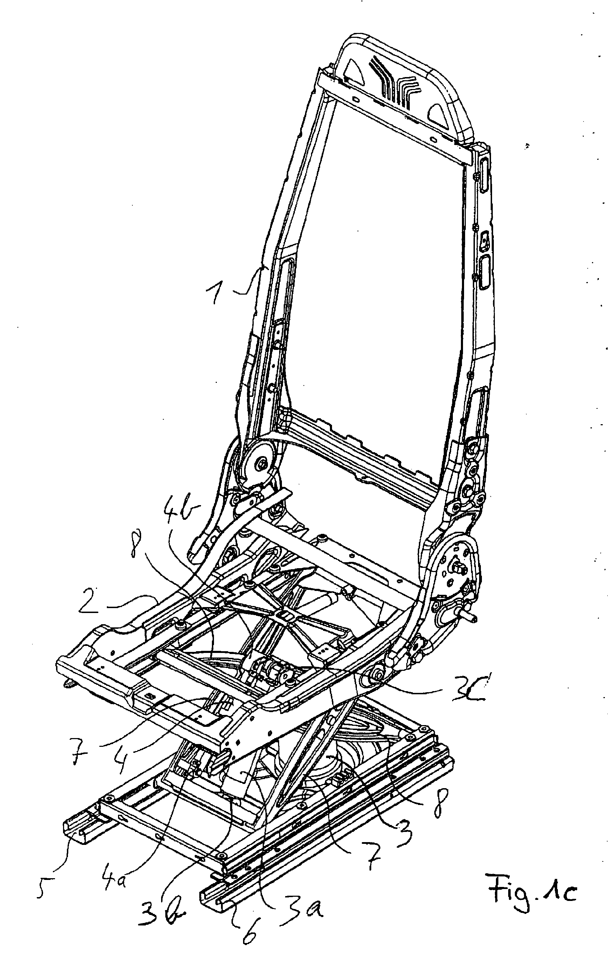

In Fig. 1b und 1c sind das erste Sitzgestellteil 7 und das zweite Sitzgestellteil 8 dargestellt, wobei sowohl die Steuereinrichtung 4 als auch ein federartiges Dämpfungselement 3a mit ersten Enden 3b und 4a an dem ersten Sitzteilgestell 7 unterseitig und mit zweiten oberen Enden 3c und 4b an dem zweiten Sitzteilgestell 8 befestigt sind.

Bei der in Fig. 1c nach oben gerichteten Verstellung des Fahrzeugsitzes sind sowohl das Dämpfungselement 3a als auch die Steuereinrichtung 4 in einem ausgezogenen Zustand angeordnet.

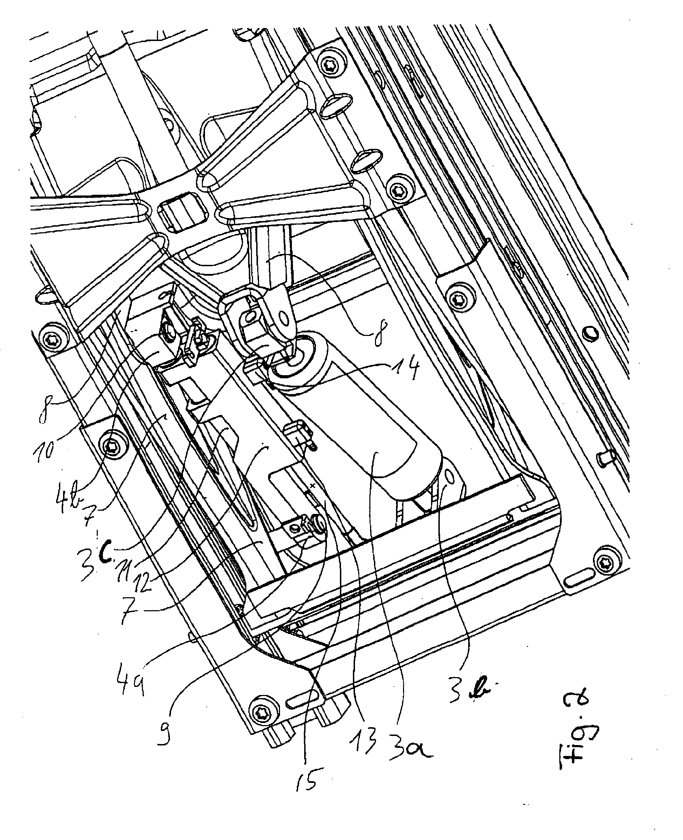

In Fig. 2 wird in einer Ausschnittsdarstellung das Fahrzeugsitzgestell im Bereich des Dämpfungselements 3a und der Steuereinrichtung 4 wiedergegeben. Die Steuereinrichtung 4 besteht aus einem innenseitig zylinderförmig ausgebildeten Bauteil 12, welches unterseitig mit dem Ende 4a gegenüber einer Schwenkachse 9 gelenkig an dem ersten Sitzgestellteil 7, welches eine außenseitige Zarge darstellt, angeordnet ist.

Das innenseitig zylinderförmig ausgestaltete Bauteil 12 ist gegenüber einer Welle 11 verschiebbar angeordnet und weißt Steuerventile 13 und 14 außenseitig auf.

Die Welle 11 ist oberseitig mittels einer Schwenkachse 10 an dem Sitzteilgestell 8 befestigt.

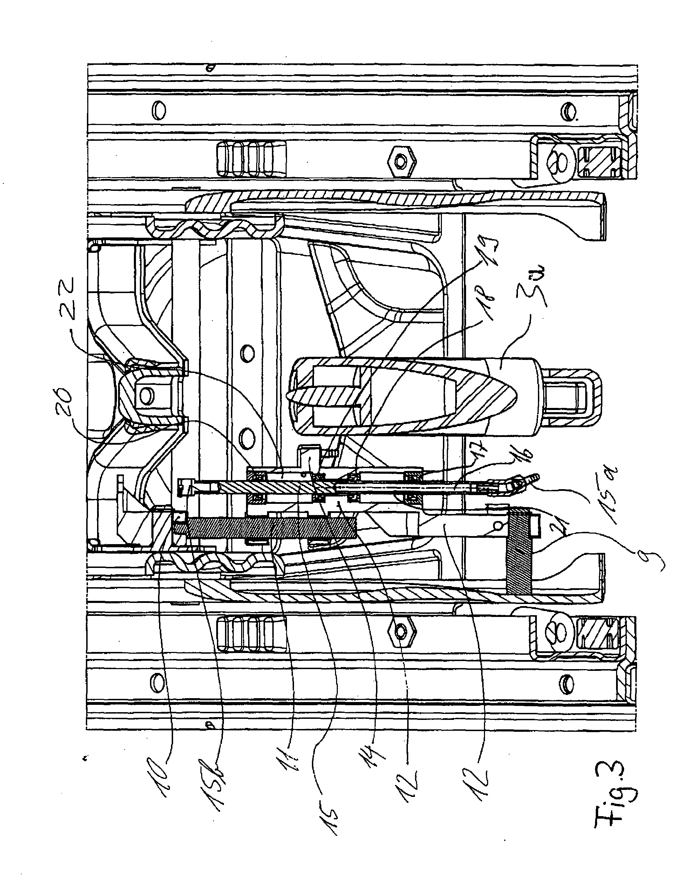

Ein Stangenelement 15, welches innerhalb des innenseitig zylinderförmig ausgestalteten Bauteiles 12 verschiebbar angeordnet ist, ist mit seinem oberen Ende 15b, wie es aus Fig. 3 ersichtlich ist, gegenüber dem zweiten Sitzteilgestell 8 fest angeordnet.

Das Stangenelement 15 weist unterseitig an seinem unteren Ende 15a eine Gasfederanschlussöffnung auf, die mit einem Hohlraum 16 innerhalb des Stangenelementes 15 verbunden ist.

Das Stangenelement 15 ist mittels ringförmig ausgestalteten Dichtungselementen 17, 18, 19 und 20 innerhalb des Bauteiles 12 angeordnet, wobei die Dichtungselemente zwei in einem Zylindermantel des Bauteiles 12 angeordnete Gaskammern 21, 22 voneinander trennen. Die erste Gaskammer 21 weist Luft mit Überdruck auf, wohingegen die zweite Gaskammer 22 einen normalen Druck, also Atmosphärendruck, aufweist.

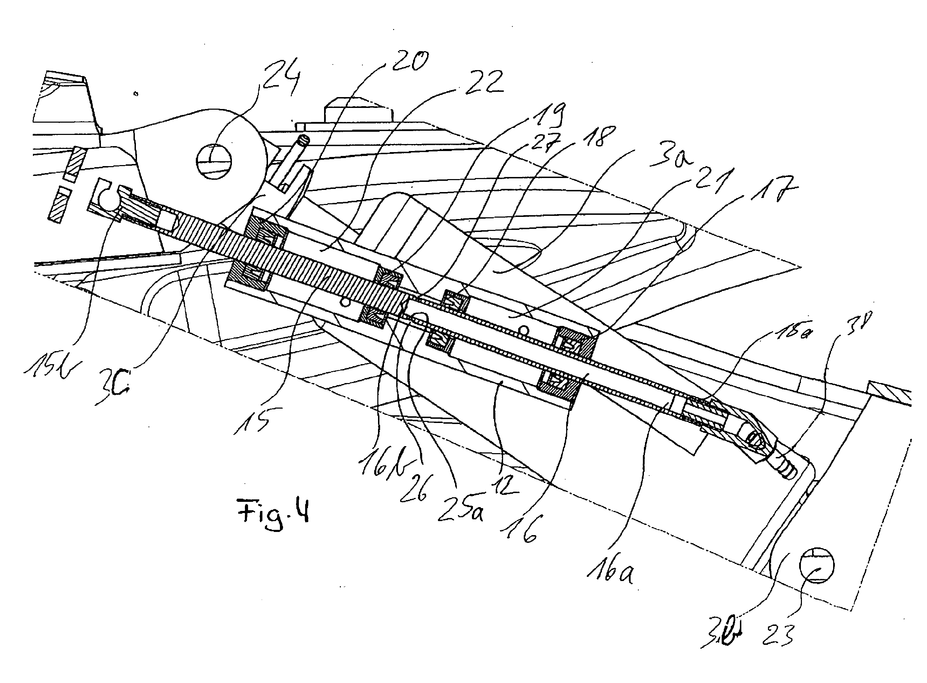

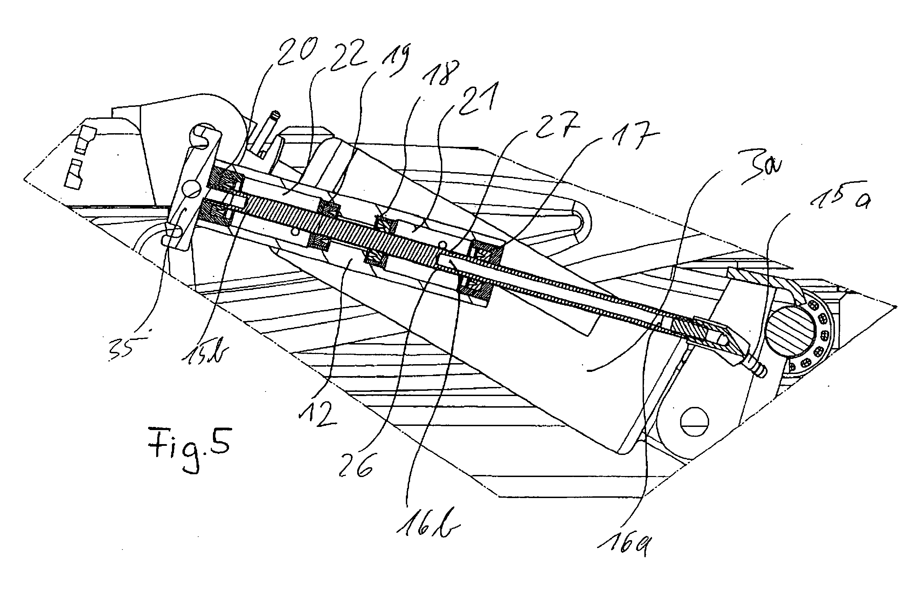

In Fig. 4 wird ein Ausschnitt des Fahrzeugsitzgestells mit dem darin angeordneten Schieberventil bzw. der Steuereinrichtung 4 im Querschnitt wiedergegeben. In Fig. 4 wird das Schieberventil in einer ersten Schieberposition und in Fig. 5 in einer zweiten Schieberposition dargestellt.

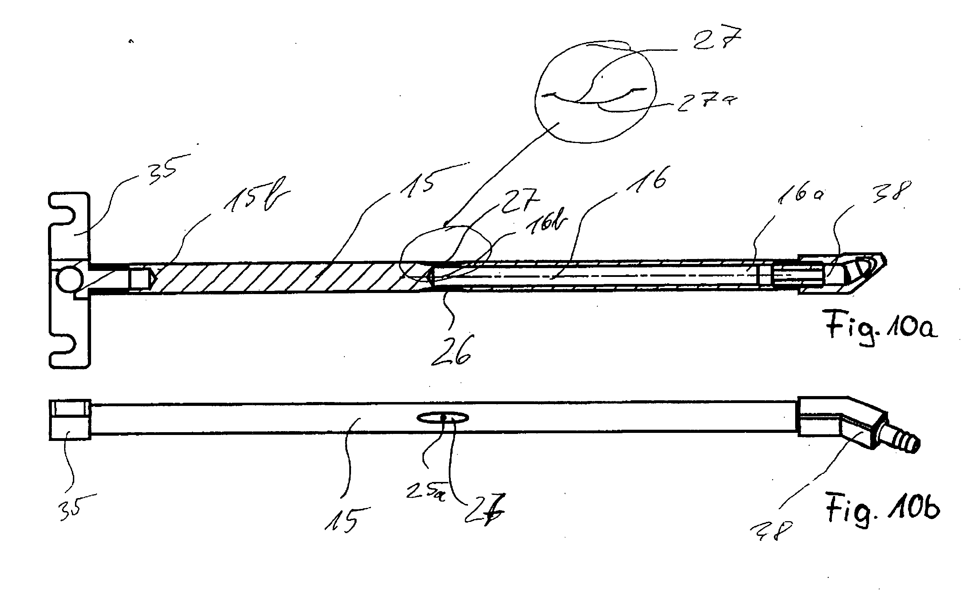

Der in Fig. 4 wiedergegebenen Darstellung des Schieberventiles ist deutlich zu entnehmen, dass die Bohrung 16 innerhalb des Stangenelementes 15 an ihrem ersten Ende 16a einen Gasfederanschluss 38 aufweist und an seinem zweiten Ende 16b links- und rechtsseitig bzw. ober- und unterseitig zwei Öffnungen 25a mit sich daran anschließenden Kerben 26, 27 die in die Oberfläche des Stangenelementes 15 eingearbeitet sind, und noch näher unter Bezugnahme auf die Figuren 10a, 10b, 11a, 11b und 12a - c dargestellt werden, ausgestattet ist.

In der hier dargestellten Neutralposition dieser Gaszu- und -abführöffnungen 25a, 26, 27 zwischen den beiden Gaskammern 21, 22 und den beiden Dichtungen 18, 19 wird die Gasfeder, welche bezüglich der Luftzu- und abfuhr über das Element 38 an das Schieberventil angeschlossen ist, weder be- noch entlüftet.

Bei der in Fig. 5 hingegen dargestellten Position des Stangenelementes 15 und damit des zweiten Endes 16b der Bohrung 16 befinden sich die Öffnungen 26, 27 im Bereich der ersten Gaskammer 21, die einen Überdruck aufweist und somit Luft über die Öffnungen 26, 27 und die Bohrung 16 sowie dem Element 38 der Gasfeder zuführt.

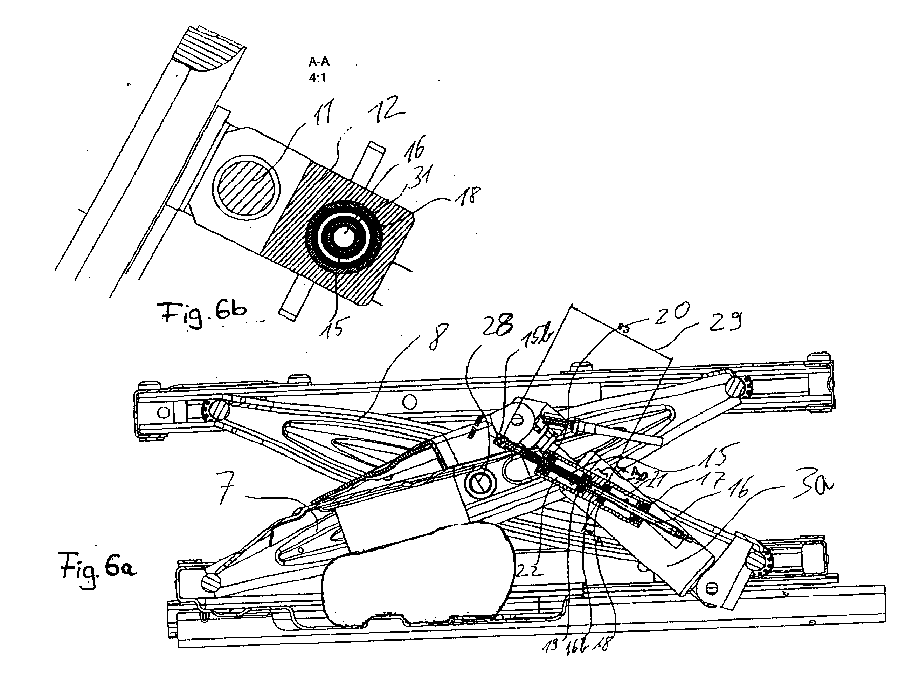

In den Figuren 6a, 6b, 7a, 7b, 8a, 8b und 9a, 9b ist das Fahrzeugsitzgestell mit der Steuereinrichtung bzw. der Höhenverstelleinrichtung bzw. dem Schieberventil in verschiedenen Höhenverstellungspositionen wiedergegeben. Das Stangenelement 15 kann mittels einer in Fig. 13 näher dargestellten Einstelleinrichtung in Form eines Bowdenzuges 40 an seinem oberen Ende 15b bei Betätigung eines Höhenverstellbetätigungselementes nach unten oder nach oben in Relation zu dem innenseitig zylinderförmig ausgebildeten Bauteil 12 verschoben werden, um hierdurch die Gas- bzw. Luftzu- und -abführöffnungen entweder in dem Bereich der Gaskammer 21 oder in dem Bereich der Gaskammer 22 oder in einem dazwischen angeordneten Abschnitt 30 anzuordnen.

Bei der in Fig. 6a und 6b dargestellten Neutralposition des Stangenelementes 15 gegenüber dem Bauteil 12 sind die Gaszu- und -abführöffnungen und damit das Ende 16b der Bohrung 16 in dem Abschnitt 30 angeordnet, in dem kein Zugang zu einem Gasvolumen für die Öffnungen besteht.

Dies geht auch aus dem in Fig. 6b dargestellten Querschnitt entlang der Linie A//A gemäß Fig. 6a hervor, worin dargestellt wird, dass zwischen dem Dichtungselement 18 und der Oberfläche des Stangenelementes 15 keine Luft entweichen bzw. zugeführt werden kann.

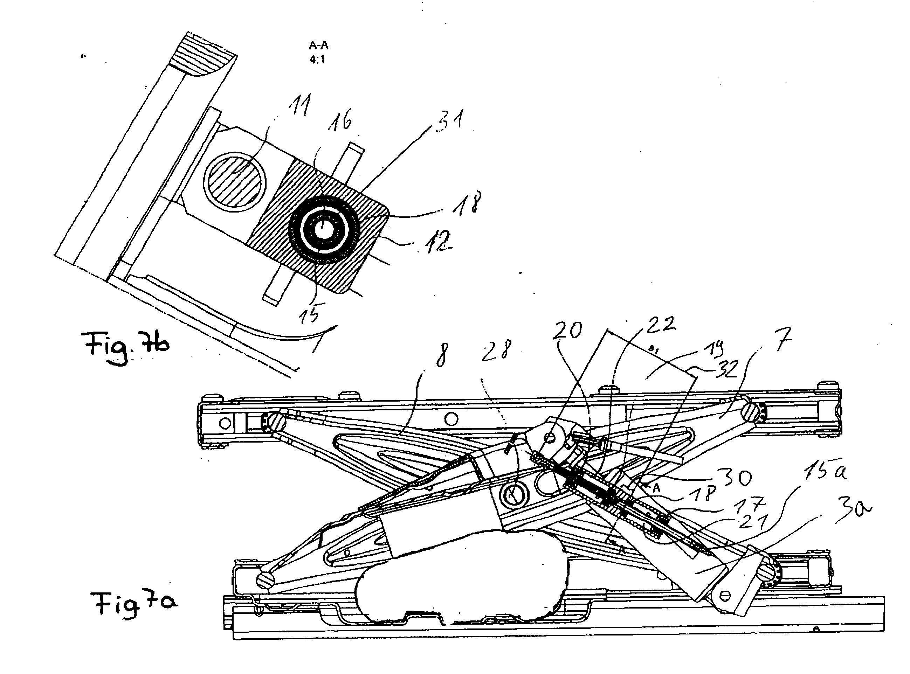

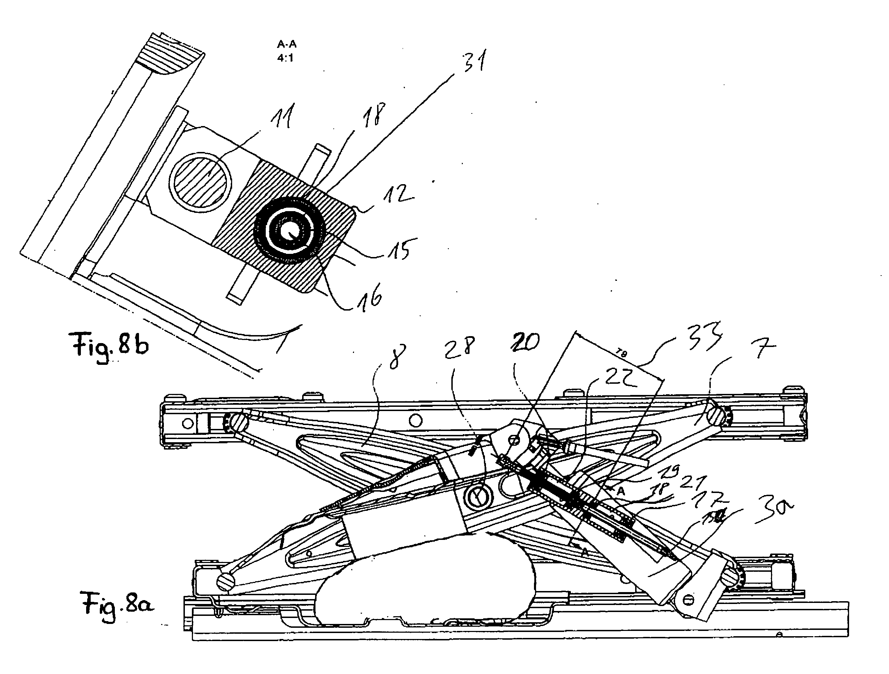

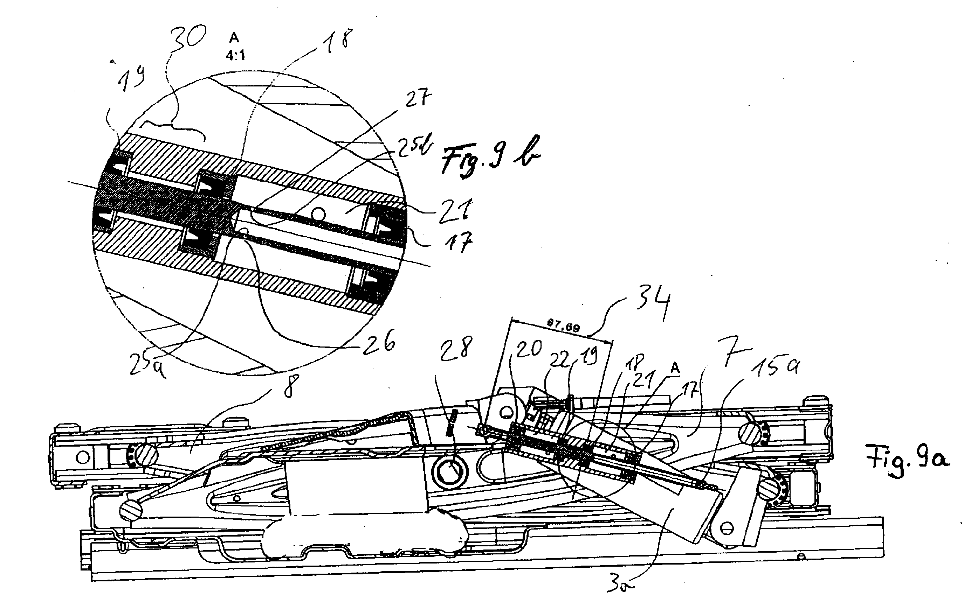

In Fig. 7 ist das Stangenelement um einen Schritt und in Fig. 8 um zwei Schritte bzw. Wegstrecken in das Bauteil 12 hineingeschoben, um so eine gewollte Höhenverstellung zu erreichen. Die unterschiedlichen Abstände werden durch die Bezugszeichen 29, 32, 33 und in Fig. 9a durch das Bezugszeichen 34 dargestellt.

Durch einen Vergleich der Figuren 6a, 7a, 8a und 9a wird verdeutlicht, dass das Ende 16b der Bohrung 16 nun zunehmend in Richtung der Belüftungskammer 21 verschoben wird, wobei bei der Stangenelementendposition gemäß Fig. 7a die Kerbe 26, 27 mit einem ersten Anteil und in Fig. 8a mit einem zweiten Anteil im Bereich der Kammer 21 angeordnet ist. Dies hat zur Folge, dass nicht die gesamte Kerbe einen Lufteinlass, der unter Überdruck angeordneten Luft innerhalb der Kammer 21 in die Bohrung 16 und somit der Gasfeder zugeführt, zulässt, sondern eine Dosierung der zugeführten Luft stattfindet. Dies wird durch den Kerbeffekt mit unterschiedlicher Tiefenausbildung erreicht, wie er später noch in Zusammenhang mit den Figuren 10a, 10b beispielsweise beschrieben wird.

Im Bereich des Bezugszeichens 31 gemäß den Figuren 6b, 7b und 8b wird somit eine mehr oder weniger starke Öffnung für die Luftzufuhr in die Öffnung 16 erhalten.

Eine Schwenkachse 28 hält die beiden Scherengestelle 7, 8 in ihrem Mittelpunkt zusammen.

In Fig. 9a ist das Fahrzeugsitzgestell in seiner untersten Position wiedergegeben. Dies entspricht einer eingefederten Federung, wobei hier eine SAS-Betätigung vorliegt. In Fig. 9b wird in der vergrößerten Ausschnittsdarstellung verdeutlicht, dass die Kerben 26, 27 nun im Bereich der Überdruckgaskammer 21 vollständig vorhanden sind.

Bei der in Fig. 6a dargestellten Neutralposition des Stangenelementes finden keine Aktivitäten statt. Bei der in Fig. 7a dargestellten Position des Stangenelementes findet eine Belüftung der Gasfeder aufgrund des geringen zur Verfügung stehenden Querschnittes der Luftzu- und -abführöffnungen nur langsam statt, sodass der Sitz sich langsam nach oben bis zu der sich automatisch einstellenden neutralen Position, wie sie in Fig. 6a wiedergegeben wird, einstellt.

In Fig. 8a steht ein größerer Querschnitt der Kerbe bzw. der Luftzu- und -abführöffnungen zur Verfügung, sodass schneller Luft in die Bohrung 16 eindringt und der Sitz dementsprechend schneller nach oben geht. Vor Erreichen der Endstellung findet automatisiert ein langsameres Nachobengehen bzw. eine Verzögerung der nachobengerichteten Bewegung des Fahrzeugsitzes statt, da sich automatisiert das Stangenelement wieder in Richtung der Neutralposition, also in Richtung des Abschnittes 30, bewegt. Anschließend wird wieder selbstständig die Neutralposition des Stangenelementes durch die Nachobenbewegung des Sitzes und damit das Ausfahren der Gasfeder und somit auch die stattfindende Relativbewegung des Bauteils 12 gegenüber dem Stangenelement 15 eingenommen.

Eine Höhenverstellung nach unten funktioniert demzufolge in genau umgekehrter Reihenfolge, d. h. der Schieber wird in Richtung der Kammer 22 verschoben, die eine Entlüftung der Luftfeder über das Steuerventil 14 bewirkt.

Bei der in Fig. 9 dargestellten Sitzgestellposition ist der Sitz voll eingefedert, wenn die Schnellabsenktaste aktiviert wird.

In Fig. 10a und 10b ist in einer Querschnittsdarstellung und in einer Draufsicht ein Stangenelement gemäß einer ersten Variante dargestellt. Diesen Darstellungen ist zu entnehmen, dass das Stangenelement an seinem ersten Ende 15a die Gasfederanschlussöffnung 38 zum Anschluss an die Gasfeder 3 aufweist und Kerben 26, 27, wie sie vergrößert ebenso dargestellt sind, zeigen. Die Kerbe 27 weist in ihrem mittleren Bereich 27a den tiefsten Punkt auf, sodass ein dosiertes Luftzu- und Abführen in Abhängigkeit von der Stellung der Kerbe gegenüber den Dichtelementen 18, 19 möglich ist.

An dem zweiten Ende 15b des Stangenelementes ist ein Befestigungselement 35 zum Befestigen des Stangenelementes gegenüber dem zweiten Sitzgestellteil 8 angeordnet.

Ein in der Luftzu- und -abführöffnung angeordnete Bohrung 25a stellt die Verbindung zu der innerhalb des Stangenelementes angeordnete Bohrung 16 dar.

In Fig. 11a und 11b ist eine weitere Variante des Stangenelementes im Querschnitt und in Draufsicht dargestellt. Bei dieser Variante handelt es ich um die an der Oberfläche des Stangenelementes 15 angeordnete Kerbe 36 mit Durchgangsbohrungen 37a, 37b, wobei die Kerbe in einem Winkel zur Längsrichtung des Stangenelementes 15 angeordnet ist. Dies ermöglicht vorteilhaft, dass ebenso wie bei der Ausführungsform gemäß den Figuren 10a und 10b ein Dichtelement bzw. ein Dichtgummi, der das Stangenelement ringförmig umgibt, nicht immer an den gleichen Stellen bei Verschieben des Stangenelementes gegenüber dem Bauteil 12 beansprucht wird und somit eine Abnutzung der Dichtelemente verzögert wird.

In Fig. 12a und 12b sowie 12c ist eine weitere Variante des Stangenelementes in Querschnittsdarstellung, Draufsicht und Ausschnittsdarstellung wiedergegeben. Diese Variante unterscheidet sich von den Varianten der Stangenelemente, die Kerben aufweisen darin, dass sie einzelne Bohrungen 39a - e aufweisen, die unterschiedliche Durchmesser beinhalten. Die Durchmesser der Bohrungen 39a und 39e sind derart abgestuft, dass diejenige Bohrung mit dem größten Durchmesser in der Mitte angeordnet ist, nämlich die Bohrung 39c. Diejenigen Bohrungen mit dem kleinsten Durchmesser 39a und 39e sind an den Enden der Bohrungsreihe angeordnet. Hierdurch ergibt sich, ähnlich wie bei den Stangenelementen mit den Kerben, vorteilhaft der Effekt, dass eine dosierte Luftzu- und -abfuhr über die Bohrung 16 in Abhängigkeit von dem Verschiebeweg des Stangenelementes 15 möglich ist.

In Fig. 13 wird in einer perspektivischen Darstellung das Schieberventil mit daran angeordneter Einstelleinrichtung wiedergegeben. Die Einstelleinrichtung besteht aus einem Bowdenzug 40 der ermöglicht, dass das Stangenelement 15 entgegen einer Zugfederkraftbeaufschlagung gemäß den Zugfedern 42, 43 gegenüber einem an dem Sitzgestellteil 8 ortsfest angeordneten Bauteil, welches den Bowdenzug 40 arretiert, verschoben werden kann. Dies wird durch den Doppelpfeil 41 gezeigt und ermöglicht somit eine gezielte und gewünschte Höhenverstellung des Fahrzeugsitzes, da das Stangenelement 15 hierdurch gegenüber dem Bauteil 12 und somit gegenüber den Dichtungselementen 18, 19 und auch den Gaskammern 21, 22 verschoben wird.

### Bezugszeichenliste

- 1: Rückenlehne
- 2: Sitzteil
- 3: Fluidfeder, insbesondere Luftfeder
- 3a: Dämpfungselement
- 3b, 4a: erste Enden am ersten Sitzteilgestell
- 3c, 4b: zweite Enden am zweiten Sitzteilgestell
- 4: Steuereinrichtung
- 5, 6: Schienen
- 7: erstes Sitzgestellteil
- 8: zweites Sitzteilgestell
- 9: Schwenkachse
- 10: Schwenkachse
- 11: Welle
- 12: innenseitig zylinderförmiges Bauteil
- 13, 14: Steuerventile
- 15: Stangenelement
- 15a: unteres Ende
- 15b: oberes Ende
- 16: Hohlraum/Bohrungen
- 16a: erstes Ende
- 16b: zweites Ende
- 17, 18, 19, 20: Dichtungselemente
- 21, 22: Gaskammern
- 23: Drehachse am ersten Sitzgestellteil
- 24: Drehachse am zweiten Sitzgestellteil
- 25a, 25b, 26, 27; 36, 37a, 37b; 39a - e: Gaszu- und -abführöffnungen
- 26, 27, 36: Kerben
- 28: Schwenkachse
- 29, 32, 33, 34: Abstände
- 30: Abschnitt
- 31: Öffnung
- 35: Befestigungselement
- 37a, 37b: Durchgangsbohrungen
- 38: Gasfederanschluss
- 39 a - e: Bohrungen
- 39a, 39e: Durchmesser
- 40: Bowdenzug
- 41: Doppelpfeil
- 42, 43: Zugfedern

## Patentansprüche

1. Fahrzeugsitz mit einem höhenverstellbaren Sitzgestell (2), das zumindest zwei relativ zueinander bewegliche Sitzgestellteile (7, 8) und zumindest eine an den Sitzgestellteilen (7, 8) zur Höhenverstellung angeordnete Fluidfeder (3), insbesondere Luftfeder aufweist, mit zumindest einer zur Beeinflussung der Fluidfeder (3) vorgesehenen Steuereinrichtung (4), die zumindest eine an einem ersten Sitzgestellteil (7) angebrachte Ventileinrichtung (12) mit Steuerventilen (13, 14) zur Ansteuerung von Fluidströmen für die Fluidfeder (3) sowie ein an einem zweiten Sitzgestellteil (8) vorgesehenes Steuerelement (15, 16) zur Ansteuerung der Steuerventile (13, 14) aufweist, sodass eine Höheneinstellung und/oder dämpfende Schwingungsbewegung des Fahrzeugsitzes gewährleistet ist,
**dadurch gekennzeichnet, dass**
die Ventileinrichtung ein innenseitig zylinderförmiges Bauteil (12) mit mindestens einem darin verschiebbar angeordneten Stangenelement (15) als Steuerelement aufweist, wobei mindestens eine Fluidzu- und -abführöffnung (25a, 25b, 26, 27; 36, 37a, 37b; 39a - e) des Stangenelementes (15) wahlweise einem der Steuerventile (13, 14) durch eine Relativverschiebung von dem zylinderförmigen Bauteil (12) und dem Stangenelement (15) zueinander zuordbar ist.

2. Fahrzeugsitz nach Anspruch 1,
**dadurch gekennzeichnet, dass**
die Fluidzu- und -abführöffnung (25a, 25b, 26, 27; 36, 37a, 37b; 39a - e) an der Oberfläche des Stangenelementes (15) mindestens eine sich in Längsrichtung des Stangenelementes (15) erstreckende Kerbe (26, 27; 36) mit einem tiefsten Punkt (27a) in dem bezogen auf die Längsrichtung vorhandenen Mittelpunkt aufweist.

3. Fahrzeugsitz nach Anspruch 2,
**dadurch gekennzeichnet, dass**
die Kerbe (36) sich in einem Winkel zur Längsrichtung des Stangenelementes (15) erstreckt.

4. Fahrzeugsitz nach Anspruch 1,
**dadurch gekennzeichnet, dass**
die Fluidzu- und -abführöffnung an der Oberfläche des Stangenelementes (15) mindestens eine Mehrzahl in Längsrichtung des Stangenelementes (15) hintereinander oder in einem Winkel zur Längsrichtung des Stangenelementes (15) hintereinander angeordnete Bohrungen (39a - e) mit von Bohrung zu Bohrung zunehmenden Durchmessern aufweist.

5. Fahrzeugsitz nach einem der vorangegangenen Ansprüche,
**dadurch gekennzeichnet, dass**
das innenseitig zylinderförmige Bauteil (12) mindestens zwei das Stangenelement (15) ringförmig umschließende Dichtelemente (18, 19) zur Bildung von mindestens zwei voneinander getrennten hintereinander angeordnete Fluidkammern (21, 22) innerhalb eines Zylindermantels des innenseitig zylinderförmigen Bauteils (12) aufweist.

6. Fahrzeugsitz nach Anspruch 5,
**dadurch gekennzeichnet, dass**
eine erste Fluidkammer (21) mit dem ersten Steuerventil (13), eine zweite Fluidkammer (22) mit dem zweiten Steuerventil (14) verbunden sind und ein zwischen der ersten und der zweiten Fluidkammer (13, 14) angeordneter Abschnitt (30) angeordnet ist.

7. Fahrzeugsitz nach einem der vorangegangenen Ansprüche,
**dadurch gekennzeichnet, dass**
das Stangenelement (15) entlang seiner Längsrichtung zumindest teilweise einen Hohlraum (16) mit einer Fluidfederanschlussöffnung (38) an seinem ersten Ende (16a) und der Fluidzu- und -abführöffnung (25a, 25b, 26, 27; 36, 37a, 37b; 39a - e) an seinem zweiten Ende (16b) aufweist.

8. Fahrzeugsitz nach einem der vorangegangenen Ansprüche,
**gekennzeichnet durch**
eine am Stangenelement (15) endseitig angeordnete Einstelleinrichtung (14) zum Einstellen des verschiebbaren Stangenelementes (15) derart relativbeweglich (41) zum innenseitig zylinderförmigen Bauteil (12), dass eine von der Einstelleinrichtung (40) bewirkte Bewegung (41) des Stangenelementes (15) relativ zum zylinderförmigen Bauteil (12) eine Höhenverstellung des Fahrzeugsitzes mit vorbestimmbarer Geschwindigkeit **durch** Verschieben der Fluidzu- und -abführöffnung (25a, 25b, 26, 27; 36, 37a, 37b; 39a - e) in die erste oder zweite Fluidkammer (21, 22) bewirkt.

9. Fahrzeugsitz nach Anspruch 8,
**gekennzeichnet durch**
mindestens ein Federelement (42, 43) zum Federkraftbeaufschlagen der Einstellbewegung (40) des Stangenelementes (15).

10. Fahrzeugsitz nach einem der vorangegangenen Ansprüche;
**dadurch gekennzeichnet, dass**
das Stangenelement (15) am zweiten Sitzgestellteil (8) gelenkig aufgehängt ist.

11. Fahrzeugsitz nach einem der vorangegangenen Ansprüche;
**dadurch gekennzeichnet, dass**
das zylinderförmige Bauteil (12) am ersten Sitzgestellteil (7) gelenkig (9) aufgehängt ist.

## Claims

1. Vehicle seat with a height-adjustable seat frame (2) which comprises at least two seat frame parts (7, 8) which can move relative to one another and at least one fluid spring (3), in particular an air spring, arranged on the seat frame parts (7, 8) for height adjustment purposes, with at least one control device (4) which is provided for influencing the fluid spring (3) and which comprises at least one valve device (12) with control valves (13, 14) which is attached to the first seat frame part (7) and is designed to control fluid flows for the fluid spring (3), and also a control element (15, 16) which is provided on a second seat frame part (8) and is designed to actuate the control valves (13, 14), so that a height adjustment and/or damping oscillatory movement of the vehicle seat is ensured, **characterised in that** the valve device comprises an internally cylindrical component (12) with at least one rod element (15) arranged displaceably therein as a control element, wherein at least one fluid intake and discharge opening (25a, 25b, 26, 27; 36, 37a, 37b; 39a-e) of the rod element (15) can selectively be assigned to one of the control valves (13, 14) by a relative displacement of the cylindrical component (12) and the rod element (15) with respect to one another.

2. Vehicle seat according to claim 1, **characterised in that** the fluid intake and discharge opening (25a, 25b, 26, 27; 36, 37a, 37b; 39a-e) on the surface of the rod element (15) comprises at least one notch (26, 27; 36) extending in the longitudinal direction of the rod element (15) with a deepest point (27a) in the centre with reference to the longitudinal direction.

3. Vehicle seat according to claim 2, **characterised in that** the notch (36) extends at an angle with respect to the longitudinal direction of the rod element (15).

4. Vehicle seat according to claim 1, **characterised in that** the fluid intake and discharge opening on the surface of the rod element (15) comprises at least several bores (39a-e) arranged one behind the other in the longitudinal direction of the rod element (15) or arranged one behind the other at an angle with respect to the longitudinal direction of the rod element (15), said bores having diameters which increase from bore to bore.

5. Vehicle seat according to one of the preceding claims, **characterised in that** the internally cylindrical component (12) has at least two sealing elements (18, 19) which annularly surround the rod element (15) and are designed to form at least two separate fluid chambers (21, 22) arranged one behind the other within a cylinder jacket of the internally cylindrical component (12).

6. Vehicle seat according to claim 5, **characterised in that** a first fluid chamber (21) is connected to the first control valve (13), a second fluid chamber (22) is connected to the second control valve (14), and there is a section (30) arranged between the first and the second fluid chamber (13, 14).

7. Vehicle seat according to one of the preceding claims, **characterised in that** the rod element (15) has along its longitudinal direction, at least partially, a cavity (16) with a fluid spring connection opening (38) at its first end (16a) and the fluid intake and discharge opening (25a, 25b, 26, 27; 36, 37a, 37b; 39a-e) at its second end (16b).

8. Vehicle seat according to one of the preceding claims, **characterised by** an adjustment device (14) which is arranged at the end of the rod element (15) and is designed to adjust the displaceable rod element (15) by a relative movement (41) with respect to the internally cylindrical component (12) such that a movement (41) of the rod element (15) relative to the cylindrical component (12) that is brought about by the adjustment device (40) causes a height adjustment of the vehicle seat at a predefinable speed by displacing the fluid intake and discharge opening (25a, 25b, 26, 27; 36, 37a, 37b; 39a-e) into the first or second fluid chamber (21, 22).

9. Vehicle seat according to claim 8, **characterised by** at least one spring element (42, 43) for applying a spring force to the adjustment movement (40) of the rod element (15).

10. Vehicle seat according to one of the preceding claims, **characterised in that** the rod element (15) is suspended in an articulated manner on the second seat frame part (8).

11. Vehicle seat according to one of the preceding claims, **characterised in that** the cylindrical component (12) is suspended in an articulated manner (9) on the first seat frame part (7).

## Revendications

1. Siège de véhicule avec une carcasse de siège (2) réglable en hauteur, qui présente au moins deux parties de carcasse de siège (7, 8) mobiles l'une par rapport à l'autre et au moins un ressort à fluide (3) aménagé sur les parties de carcasse de siège (7, 8) pour le réglage en hauteur, en particulier un ressort pneumatique, avec au moins un dispositif de commande (4) prévu pour agir sur le ressort à fluide (3), le dispositif de commande comprenant au moins un dispositif à soupapes (12) monté sur une première partie de carcasse de siège (7) avec des soupapes de commande (13, 14) pour commander des courants de fluide pour le ressort à fluide (3), ainsi qu'un élément de commande (15, 16) prévu sur une seconde partie de carcasse de siège (8) pour commander les soupapes de commande (13,14), de manière à assurer un réglage en hauteur et/ou un mouvement d'oscillation amortisseur du siège de véhicule,
**caractérisé en ce que**
le dispositif à soupapes présente un composant cylindrique côté interne (12) avec au moins un élément de tige (15) qui y est agencé comme élément de commande coulissant, dans lequel au moins une ouverture d'alimentation et d'évacuation de fluide (25a, 25b, 26, 27 ; 36, 37a, 37b ; 39a-e) de l'élément de tige (15) peut être affectée au choix à l'une des soupapes de commande (13,14) par un coulissement relatif mutuel du composant cylindrique (12) et de l'élément de tige (15).

2. Siège de véhicule selon la revendication 1,
**caractérisé en ce que**
l'ouverture d'alimentation et d'évacuation de fluide (25a, 25b, 26, 27 ; 36, 37a, 37b ; 39a-e) présente à la surface de l'élément de tige (15) au moins une encoche (26, 27 ; 36) s'étendant dans la direction longitudinale de l'élément de tige (15) avec un point le plus bas (27a) au niveau du point médian relativement à la direction longitudinale.

3. Siège de véhicule selon la revendication 2,
**caractérisé en ce que**
l'encoche (36) s'étend en formant un certain angle avec la direction longitudinale de l'élément de tige (15).

4. Siège de véhicule selon la revendication 1,
**caractérisé en ce que**
l'ouverture d'alimentation et d'évacuation de fluide présente à la surface de l'élément de tige (15) au moins une pluralité de perçages (39a-e) ménagés l'un derrière l'autre dans la direction longitudinale de l'élément de tige (15) ou en formant un certain angle avec la direction longitudinale de l'élément de tige (15) avec des diamètres croissant de perçage en perçage.

5. Siège de véhicule selon l'une quelconque des revendications précédentes,
**caractérisé en ce que**
le composant cylindrique côté interne (10) présente au moins deux éléments de joint (18, 19) entourant en forme d'anneau l'élément de tige (15) pour former au moins deux chambres à fluide (21, 22), aménagées l'une derrière l'autre et séparées l'une de l'autre dans une enveloppe cylindrique du composant cylindrique côté interne (12).

6. Siège de véhicule selon la revendication 5,
**caractérisé en ce que**
une première chambre à fluide (21) est raccordée à la première soupape de commande (13) et une seconde chambre à fluide (22) est raccordée à la seconde soupape de commande (14) et **en ce que** l'on aménage une section (30) disposée entre les première et seconde chambres à fluide (13, 14).

7. Siège de véhicule selon l'une quelconque des revendications précédentes,
**caractérisé en ce que**
l'élément de tige (15) présente le long de sa direction longitudinale, au moins en partie, un espace creux (16) avec une ouverture (38) de raccordement du ressort à fluide (38) à sa première extrémité (16a) et l'ouverture d'alimentation et d'évacuation de fluide (25a, 25b, 26, 27 ; 36, 37a, 37b ; 39a-e) à sa seconde extrémité (16b).

8. Siège de véhicule selon l'une quelconque des revendications précédentes,
**caractérisé par**
un dispositif de réglage (14) aménagé côté extrémité sur l'élément de tige (15) pour régler l'élément de tige coulissant (15) pour le rendre relativement mobile (41) par rapport au composant cylindrique côté interne (12) de sorte qu'un mouvement (41) de l'élément de tige (15) par rapport au composant cylindrique (12) provoqué par le dispositif de réglage (40) entraîne un réglage en hauteur du siège de véhicule à une vitesse prédéterminable par coulissement de l'ouverture d'alimentation et d'évacuation de fluide (25a, 25b, 26, 27 ; 36, 37a, 37b ; 39a-e) dans la première ou la seconde chambre à fluide (21, 22).

9. Siège de véhicule selon la revendication 8,
**caractérisé par**
au moins un élément à ressort (42, 43) pour exercer une force élastique sur le mouvement de réglage (40) de l'élément de tige (15).

10. Siège de véhicule selon l'une quelconque des revendications précédentes,
**caractérisé en ce que**
l'élément de tige (15) est accroché de manière articulée à la seconde partie de carcasse de siège (8).

11. Siège de véhicule selon l'une quelconque des revendications précédentes,
**caractérisé en ce que**
le composant cylindrique (12) est accroché de manière articulée (9) à la première partie de carcasse de siège (7).
